# EUROPÄISCHE PATENTSCHRIFT

(11) **EP 2 899 147 B1**
(45) Veröffentlichungstag und Bekanntmachung des Hinweises auf die Patenterteilung: **17.02.2016**
(21) Anmeldenummer: 14194749.9
(22) Anmeldetag: 25.11.2014
(51) Int. Cl.: B65G 47/72

(54) **Schüttgutweiche**
Switch for bulk material
Séparateur de marchandise en vrac

(30) Priorität: 24.01.2014 DE 202014100319 U
(43) Veröffentlichungstag der Anmeldung: 29.07.2015
(73) Patentinhaber: MTF Technik Hardy Schürfeld GmbH & Co. KG, 51702 Bergneustadt (DE)
(72) Erfinder: Hartmann Dirk,, 51643 Gummersbach (DE); Schürfeld, Hardy, 51702 Bergneustadt (DE)
(74) Vertreter: Stenger Watzke Ring

(56) Entgegenhaltungen:
- EP-A1- 2 177 461
- DD-A3- 205 806

## Beschreibung

Die Erfindung betrifft eine Schüttgutweiche nach dem Oberbegriff des Anspruchs 1.

Eine Schüttgutweiche der gattungsgemäßen Art verfügt über ein Gehäuse, das für ein Eindringen von Schüttgut über einen Eingangsanschluss und für den Austrag von Schüttgut über mehrere Ausgangsanschlüsse verfügt. Es sind dabei wenigstens zwei Ausgangsanschlüsse vorgesehen, in welchem Fall die Schüttgutweiche als 2-Wege-Weiche ausgebildet ist. Im Falle von drei Ausgangsanschlüssen liegt eine sogenannte 3-Wege-Weiche vor.

Innerhalb des Gehäuses ist eine Weichenklappe verdrehbar angeordnet. Diese Weichenklappe stellt für das in die Schüttgutweiche einzubringende Schüttgut eine Leitfläche bereit. Je nach Stellung der Weichenklappe ist der Eingangsanschluss mit einem der Ausgangsanschlüsse verbunden, so dass in die Schüttgutweiche eingebrachtes Schüttgut auf den entsprechenden Ausgangsanschluss gegeben wird.

Die Schüttgutweiche ermöglicht eine Verteilung von Schüttgut auf unterschiedliche Abgabestellen, und zwar je nach Stellung der im Gehäuse der Schüttgutweiche verdrehbar angeordneten Weichenklappe.

Aus der DE 198 20 914 A1 ist eine Vorrichtung zum Leiten von in Luft schwebend geförderten textilen Faserflocken bekannt geworden. Diese Vorrichtung verfügt über ein Gehäuse, das einen Eingangsanschluss und zwei Ausgangsanschlüsse bereitstellt. Innerhalb des Gehäuses sind zwei Weichenklappen verdrehbar angeordnet, wobei je nach Stellung der Weichenklappen entweder nur ein Ausgangsanschluss oder beide Ausgangsanschlüsse strömungstechnisch mit dem Eingangsanschluss gekoppelt sind.

Eine zur Vorrichtung nach der DE 198 20 914 A1 vergleichbare Vorrichtung ist in der Ausgestaltung als sogenannte Rohrschleuse aus der DD 203 515 bekannt. Die hier beschriebene Rohrschleuse verfügt über ein Fallrohr mit zwei daran strömungstechnisch angeschlossenen Rohrenden. Die Rohrenden sind unter Zwischenschaltung eines Hosenstücks an das Fallrohr angeschlossen, wobei innerhalb des Hosenstücks eine verschwenkbare Klappe angeordnet ist. Mittels dieser Klappe können die beiden Rohrenden wahlweise geschlossen oder geöffnet werden.

Aus der DD 205 806 ist ferner eine Vorrichtung zur Zuführung und sortenreinen Verteilung körniger Medien bekannt geworden. Gemäß dieser Vorrichtung ist ein Gehäuse vorgesehen, das über einen Eingangsanschluss und zwei Ausgangsanschlüsse verfügt. Innerhalb des Gehäuses ist ein Schwenkrohr angeordnet, das in seiner Stellung den Eingangsanschluss mit dem einen Ausgangsanschluss und in seiner anderen Stellung den Eingangsanschluss mit dem anderen Ausgangsanschluss strömungstechnisch koppelt.

Die JP 01064919 A zeigt ein Rohr mit davon abgehenden Nebenrohren. Die Nebenrohre sind jeweils mittels einer verdrehbaren Klappe verschließbar, so dass je nach Stellung der jeweiligen Klappe ein strömungstechnischer Anschluss des zugehörigen Nebenrohrs an das Rohr erreicht ist.

Die EP 2 177 461 A offenbart eine Schüttgutweiche nach dem Oberbegriff des Anspruchs 1.

Die aus dem Stand der Technik vorbekannte Konstruktion einer Schüttgutweiche hat sich im alltäglichen Praxiseinsatz dem Grunde nach bewährt. Es gibt gleichwohl Nachteile.

Um die Gängigkeit der Schüttgutweiche auch unter dem Aspekt der im bestimmungsgemäßen Verwendungsfall auftretenden mechanischen Belastungen sicherzustellen, ist es erforderlich, die Weichenklappe unter einem gewissen Spaltmaß innerhalb des Gehäuses anzuordnen. Es besteht ansonsten die Gefahr, dass es bei einer Verschwenkbewegung der Weichenklappe zur Ansteuerung eines anderen Ausgangsanschlusses zu einem Verklemmen der Weichenklappe innerhalb des Gehäuses kommen kann. Dieses für einen störungsfreien Betrieb der Schüttgutweiche zwingenderweise einzuhaltende Spaltmaß führt jedoch in nachteiliger Weise bei kleinteiligem Schüttgut dazu, dass sich dieses im Spaltraum zwischen der Gehäuseinnenwand einerseits und einer gehäuseseitigen Randkante der Weichenklappe andererseits verklemmen kann. Dies führt nicht nur zu ungewünschten Klapper- und Kratzgeräuschen bei einer Verstellbewegung der Weichenklappe, es kann auch zu einem Festsetzen der Weichenklappe kommen, was zu einem Komplettausfall der Schüttgutweiche führt. Damit sind vorbekannte Schüttgutweichen für kleinteiliges Schüttgut nicht oder nur bedingt geeignet und ihr Einsatz erfordert einen hohen Wartungsaufwand.

Diese Nachteile gilt es zu überwinden, weshalb es die Aufgabe der Erfindung ist, eine Schüttgutweiche der eingangs genannten Art dahingehend weiterzuentwickeln, dass bei möglichst minimiertem Wartungsaufwand eine Eignung der Schüttgutweiche auch für kleinteiligeres Schüttgut gegeben ist.

Die Lösung dieser Aufgabe erfolgt durch die Merkmale des Anspruchs 1.

Die Schüttgutweiche nach der Erfindung verfügt über einen Weichenkörper. Dieser dient dazu, in die Schüttgutweiche eingebrachtes Schüttgut wahlweise auf die jeweiligen Ausgangsanschlüsse zu verteilen.

Der Weichenkörper weist zwei zueinander beabstandet ausgebildete Begrenzungsscheiben auf. Diese nehmen die Weichenklappe zwischen sich auf, wobei die Weichenklappe in ihrer relativen Lage zu den Begrenzungsscheiben ortsfest ist. Im Falle einer Verdrehbewegung des Weichenkörpers verdrehen also die Begrenzungsscheiben zusammen mit der zwischen den Begrenzungsscheiben angeordneten Weichenklappe.

Die Begrenzungsscheiben nehmen die Weichenklappe spaltfrei zwischen sich auf. Die Weichenklappe kann beispielsweise durch Verschweißen stoffschlüssig mit den Begrenzungsscheiben verbunden sein.

Die erfindungsgemäße Ausgestaltung bietet mit Vorteil die Möglichkeit, auch kleinteiliges Schüttgut durch entsprechende Weichenstellung auf unterschiedliche Ausgangsanschlüsse zu verteilen, und zwar ohne das die Gefahr besteht, dass es hinsichtlich der Weichenklappe zu einer Verklemmung im Gehäuse kommt. Dieser Vorteil ergibt sich aufgrund der konstruktiven Ausgestaltung deshalb, weil im Unterschied zum Stand der Technik nicht die Weichenklappe als solche verdrehbar innerhalb des Gehäuses der Schüttgutweiche angeordnet ist, sondern die Weichenklappe vielmehr als Teil des Weichenkörpers ausgebildet ist, und es der Weichenkörper ist, der verdrehbar innerhalb des Gehäuses der Schüttgutweiche angeordnet ist. Damit verlagert sich der notwendigerweise für einen ordnungsgemäßen Verdrehbetrieb fertigungstechnisch vorzusehende Spalt zwischen die jeweiligen Umfangsrandkanten der Begrenzungsscheiben einerseits und dem Gehäuse der Schüttgutweiche andererseits. Im ordnungsgemäßen Betrieb der Schüttgutweiche findet eine direkte Beaufschlagung des zwischen den Begrenzungsscheiben und dem Gehäuse vorzusehenden Spalt mit Schüttgut nicht statt, so dass die Gefahr eines Einklemmens von Schüttguteilchen sowie eines damit unter Umständen einhergehenden Verklemmens der Schüttgutweiche deutlich minimiert ist.

Die erfindungsgemäße Schüttgutweiche kann in vorteilhafter Weise nicht nur im Zusammenhang mit kleinteiligem Schüttgut Verwendung finden. Die erfindungsgemäße Schüttgutweiche eignet sich vielmehr für die Verarbeitung von "verklemmfreudigem" Gut im Allgemeinen, das heißt beispielsweise auch von größeren Teilen, die aufgrund scharfer Kanten und/oder spitz zulaufender Geometrien zur Verklemmung neigen.

Die Weichenklappe verfügt über eine Vorderseite sowie über eine Rückseite, wobei jeweils sowohl die Vorderseite als auch die Rückseite eine Leitfläche bereitstellen. Im bestimmungsgemäßen Verwendungsfall verbindet bei entsprechender Positionierung des Weichenkörpers die Weichenklappe den Eingangsanschluss mit einem ersten Ausgangsanschluss, in welchem Fall die Leitfläche der Vorder- beziehungsweise der Rückseite dem Schüttguttransport dient. Bei Verbindung des Eingangsanschluss mit dem anderen Ausgangsanschluss dient die Leitfläche der anderen Seite der Weichenklappe dem Schüttguttransport.

Im Falle der Ausgestaltung der Schüttgutweiche als 3-Wege-Weiche weist der Weichenkörper eine zweite Weichenklappe auf. In diesem Fall können wahlweise drei unterschiedliche Ausgangsanschlüsse mit dem Eingangsanschluss der Schüttgutweiche strömungstechnisch verbunden werden. Dabei ist auch die zweite Weichenklappe spaltfrei zwischen den beiden Begrenzungsscheiben des Weichenkörpers angeordnet.

Die Weichenklappen sind erfindungsweise mit ihren jeweiligen vorderseitigen Leitflächen einander zugewandt ausgerichtet. In Ausgangsstellung der Schüttgutweiche wird über die Eingangsöffnung eingeführtes Schüttgut zwischen den beiden beabstandet zueinander angeordneten Weichenklappe hindurch gefördert, wobei die jeweiligen Leitflächen der Vorderseiten der Weichenklappe dem Schüttguttransport dienen. In einer ersten verdrehten Positionierung des Weichenkörpers verbindet die eine Weichenklappe mit ihrer rückseitigen Leitfläche den Eingangsanschluss mit einem ersten weiteren Ausgangsanschluss. In einer zweiten verdrehten Positionierung des Weichenkörpers ist der Eingangsanschluss mit einem zweiten weiteren Ausgangsanschluss verbunden, in weichem Fall die andere der beiden Weichenklappen mit ihrer rückseitigen Leitfläche dem Schüttguttransport dient.

Ein weiterer Vorteil der erfindungsgemäßen Schüttgutweiche liegt in der konstruktiv gegebenen Möglichkeit, die Weichenklappen und/oder die Begrenzungsscheiben und/oder andere Schüttgut berührende Komponenten der Schüttgutweiche aus unterschiedlichen Werkstoffen zu bilden. Darüber hinaus ist es möglich, schüttgutführende und/oder -berührende Baüteilkomponenten der Schüttgutweiche mit unterschiedlichen Flächenausgestaltungen, insbesondere Oberflächenausgestaltungen auszurüsten, was beispielsweise für den Bereich der Medizintechnik von Bedeutung ist. Es können auch im Besonderen ausgebildete Beschichtungen vorgesehen sein, die beispielsweise einer Teileschonung und/oder einer Geräuschdämmung dienen. Bei der aus dem Stand der Technik bislang bekannten Weichentechnik konnten derartige Materialkombinationen aufgrund von unterschiedlichen Wärmeausdehnungskoeffizienten und der damit einhergehenden Spaltproblematik nur bedingt eingesetzt werden. Die erfindungsgemäße Konstruktion gestattet es indes, geeignete Materialpaarurigen vorzusehen, beispielsweise das Gehäuse aus Edeistahl und den Weichenkörpers aus Kunststoff, beispielsweise Polyamid auszubilden.

Die beiden Weichenklappen sind gemäß der Erfindung unter Einschluss eines spitz zulaufenden Winkels schräg zueinander ausgerichtet. Die Weichenklappen bilden mithin einen keilförmig zwischen sich zulaufenden Volumenraum aus, womit sich ein in Normalstellung der Schüttgutweiche in Richtung auf den zugehörigen Ausgangsanschluss verjüngender Volumenraum einstellt. Es ergibt sich so eine für den Schüttguttransport innerhalb des Gehäuses der Schüttgutweiche günstige Geometrie.

Gemäß der Erfindung ist vorgesehen, dass die Begrenzungsscheiben kreisförmig ausgebildet sind. Diese Ausgestaltung gestattet ein umfangsseitig der Begrenzungsscheiben gleichmäßiges Spaltmaß. Darüber hinaus ist aufgrund der gleichmäßigen Gewichtsverteilung ein präziser Rundlauf des Weichenkörpers innerhalb der dafür vorgesehenen Gehäuseöffnung begünstigt.

Weitere Merkmale und Vorteile der Erfindung ergeben sich aus der nachfolgenden Beschreibung anhand der Figuren. Dabei zeigen
- Fig. 1: in schematisch perspektivischer Draufsicht von oben eine erfindungsgemäße Schüttgutweiche;
- Fig. 2: in schematisch perspektivischer Draufsicht von unten eine erfindungsgemäße Schuttgutweiche;
- Fig. 3: in schematischer Seitenansicht eine Schüttgutweiche nach der Erfindung;
- Fig. 4: in schematischer Draufsicht von oben eine Schüttgutweiche nach der Erfindung;
- Fig. 5: in schematischer Schnittdarstellung eine erfindungsgemäße Schüttgutweiche gemäß Schnittlinie V-V nach Fig. 4;
- Fig. 6: eine in schematischer Seitenansicht eine Schüttgutweiche nach dem Stand der Technik in einer ersten Stellung;
- Fig. 7: die Schüttgutweiche nach Fig. 6 in einer zweiten Stellung und
- Fig. 8: die Schüttgutweiche nach Fig. 6 in einer dritten Stellung.

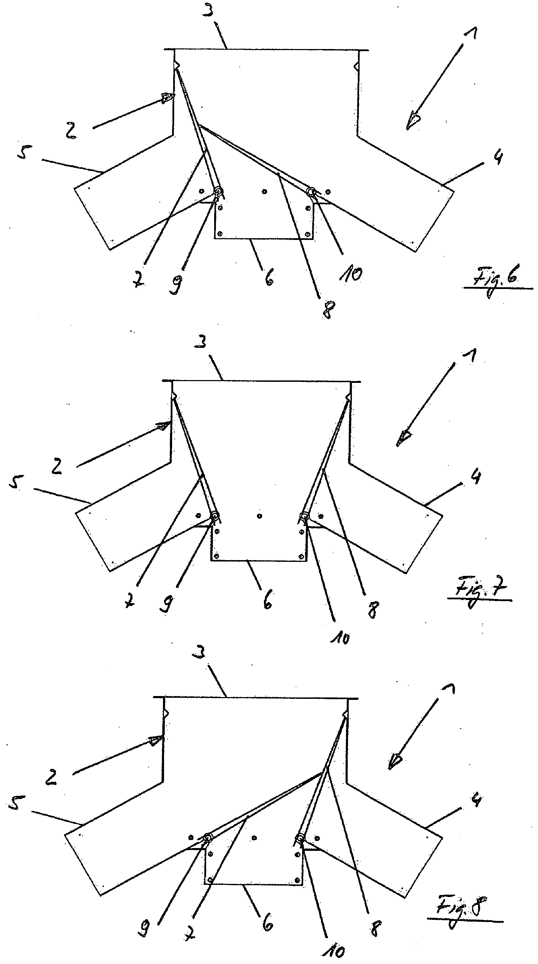

Die Figuren 6, 7 und 8 lassen eine Schüttgutweiche nach dem Stand der Technik erkennen. Dabei zeigen die Figuren 6, 7 und 8 jeweils unterschiedliche Schüttgutweichenstellung.

Die Schüttgutweiche 1 verfügt über ein Gehäuse 2, das im gezeigten Ausführungsbeispiel einen Eingangsanschluss 3 und drei Ausgangsanschlüsse 4, 5 und 6 bereitstellt. Bei der dargestellten Schüttgutweiche handelt es sich um eine sogenannte 3-Wege-Schüttgutweiche.

Im bestimmungsgemäßen Verwendungsfall wird über den Eingangsanschluss 3 der Schüttgutweiche 1 Schüttgut in die Schüttgutweiche 1 eingebracht. Dieses kann wahlweise auf eine der drei Ausgangsanschlüsse 4, 5 oder 6 verteilt werden.

Zu diesem Zweck sind innerhalb des Gehäuses 2 zwei verdrehbare Weichenklappen 7 und 8 angeordnet, mittels welchen die Ausgangsanschlüsse 4, 5 und 6 mit dem Eingangsanschluss 3 wahlweise verbunden werden können. Dabei ist die Weichenklappe 7 um die Drehachse 9 und die Weichenklappe 8 um die Drehachse 10 verschwenkbar.

Fig. 6 lässt eine erste Stellung der Schüttgutweiche 1 erkennen. In dieser Stellung der Schüttgutweiche 1 befindet sich die Weichenklappe 7 in ihrer Ausgangsstellung, wohingegen die Weichenklappe 8 mit Bezug auf die Zeichnungsebene nach Fig. 6 nach links verschwenkt ist. In dieser Stellung der Weichenklappen 7 und 8 ist der mit Bezug auf die Zeichnungsebene nach Fig. 6 rechte Ausgangsanschluss 4 mit dem Eingangsanschluss 3 strömungstechnisch verbunden.

Fig. 7 zeigt die Schüttgutweiche 1 in ihrer Normalstellung, in welcher sich beide Weichenklappen 7 und 8 jeweils in ihrer unverschwenkten Normalstellung befinden. In dieser Stellung der Weichenklappen 7 und 8 ist der mit Bezug auf die Zeichnungsebene nach Fig. 7 mittlerer Ausgangsanschluss 6 mit dem Eingangsanschluss 3 verbunden, das heißt auf die Schüttgutweiche 1 aufgegebenes Schüttgut fällt ohne Umlenkung durch die Schüttgutweiche 1 hindurch.

In der Schüttgutweichenstellung nach Fig. 8 befindet sich die Weichenklappe 8 in ihrer unverschwenkten Normalstellung, wohingegen die Weichenklappe 7 mit Bezug auf die Zeichnungsebene nach Fig. 8 nach rechts verschwenkt ist. In dieser Stellung der Weichenklappen 7 und 8 ist der mit Bezug auf die Zeichnungsebene nach Fig. 8 linke Ausgangsanschluss 5 mit dem Eingangsanschluss 3 verbunden.

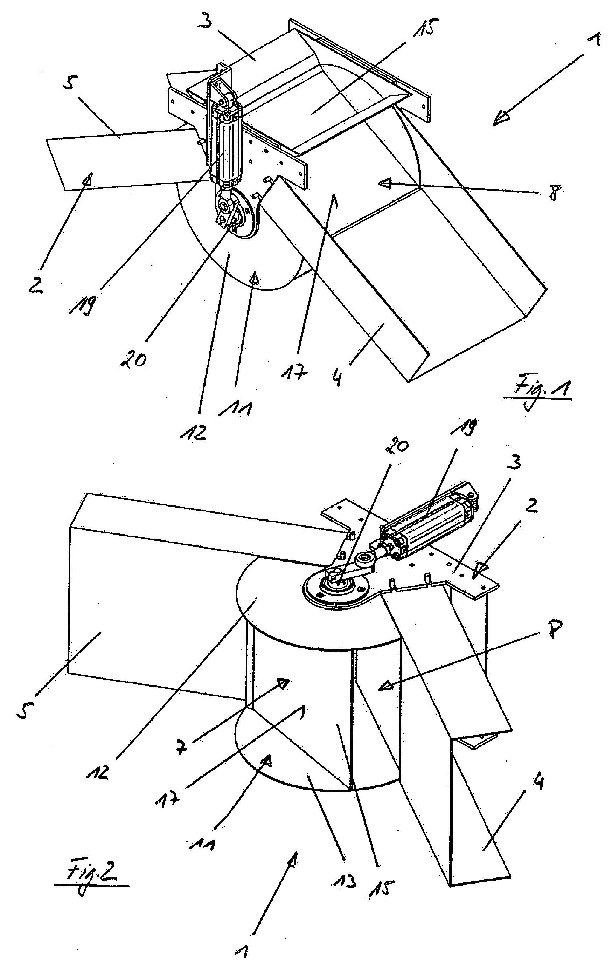

Um einen ordnungsgemäßen Betrieb der Schüttgutweiche 1 sicherzustellen, sind die Weichenklappe 7 und 8 zwecks drehverschwenklicher Anordnung innerhalb des Gehäuses 2 unter Belassung eines Spaltabstandes zum Gehäuse 2 innerhalb desselben angeordnet. Bei kleinteiligem Schüttgut kann es in nachteiliger Weise zu einem Verklemmen von Schüttgut im Spalt zwischen Gehäuse 2 und jeweiliger Weichenklappe 7 und 8 kommen, was nicht nur zu ungewollten Kratz- und Klappergeräuschen, sondern auch zu einem Festsetzen der jeweiligen Weichenklappen 7 und 8 führen kann. Dieser Nachteil ist mitdererfindungsgemäßen Konstruktion überwunden, wie sich diese aus den Figuren 1 bis 5 ergibt.

Die erfindungsgemäße Schüttgutweiche 1 verfügt über einen Weichenkörper 11. Dieser weist, wie insbesondere die Darstellung nach den Figuren 1 und 2 erkennen lässt, zwei kreisförmig ausgebildete Begrenzungsscheiben 12 und 13 auf. Diese Begrenzungsscheiben 12 und 13 sind beabstandet zueinander angeordnet und nehmen die beiden Weichenklappen 7 und 8 spaltfrei zwischen sich auf. Damit sind die Weichenklappen 7 und 8 jeweils als Teil des Weichenkörpers 11 ausgebildet, der innerhalb des Gehäuses 2 der Schüttgutweiche 11 um eine Drehachse 20 verdrehbar angeordnet ist.

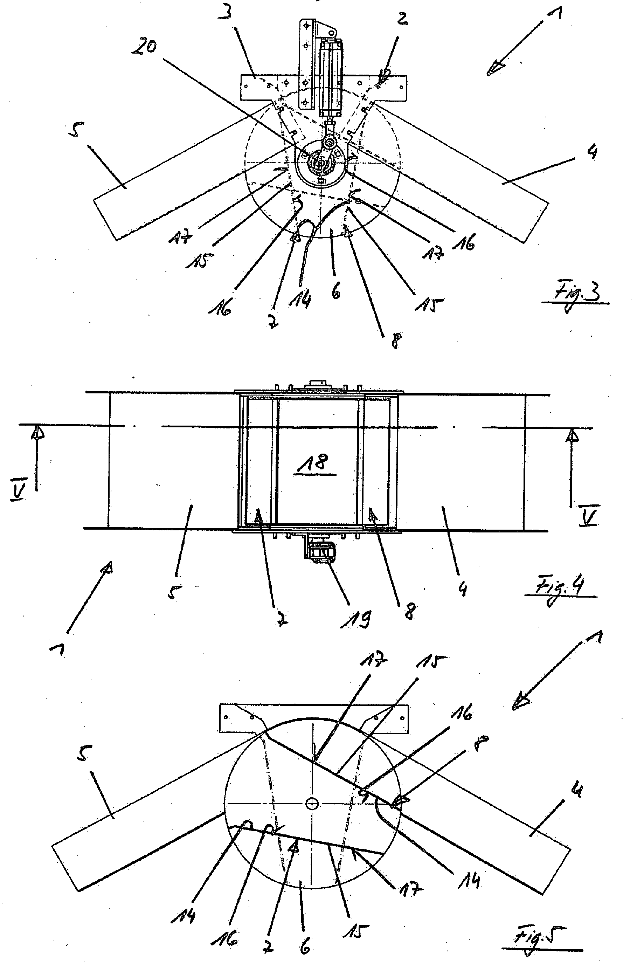

Wie insbesondere eine Zusammenschau der Figuren 3 und 5 erkennen lässt, verfügt jede Weichenklappe 7 beziehungsweise 8 jeweils über eine Vorderseite 14 und eine Rückseite 15. Dabei stellen sowohl die Vorderseiten als auch die Rückseiten jeweils Leitflächen bereit, wobei die Rückseiten 15 die Leitflächen 17 und die Vorderseiten 14 die Leitflächen 16 definieren.

Wie die Figuren 3 und 5 ferner erkennen lassen, sind die Weichenklappen 7 und 8 mit ihren jeweiligen vorderseitigen Leitflächen 16 einander zugewandt ausgerichtet, wobei die Weichenklappen 7 und 8 unter Einschluss eines spitzen Winkels schräg zueinander verlaufen. Damit bilden die Weichenklappen 7 und 8 einen Volumenraum 18 zwischen sich aus, der keilförmige zulaufend ausgebildet ist, wie sich dies auch aus einer Draufsicht von oben auch aus Fig. 4 ergibt.

Der Weichenkörper 11 kann drei mögliche Stellungen in Relation zum Gehäuse 2 einnehmen, wobei zum Zwecke der Verstellung eine Verstelleinrichtung 19 dient.

Den Figuren 3 und 5 sind exemplarisch zwei mögliche Stellungen des Weichenkörpers 11 zu entnehmen. Die dritte mögliche Stellung des Weichenkörpers 11 ist der besseren Übersicht wegen nicht dargestellt.

In der Ausgangsstellung des Weichenkörpers 11 sind der mit Bezug auf die Zeichnungsebene nach Fig. 3 untere Ausgangsanschluss 6, der im gezeigten Ausführungsbeispiel vom Weichenkörper 11 selbst gebildet ist, und der Eingangsanschluss 3 strömungstechnisch miteinander verbunden. Über den Eingangsanschluss 3 aufgegebenes Schüttgut wird mittels der einander zugewandten Leitflächen 16 der Vorderseiten 14 der Weichenklappen 7 und 8 mit Bezug auf die Zeichnungsebene 6 nach unten zum Ausgangsänschluss 6 transportiert. Dabei wirken die Weichenklappen 7 und 8 aufgrund ihrer schräg zueinander ausgerichteten Anordnung trichterförmig zusammen.

Die in den Figuren 3 und 5 gezeigte zweite Stellung des Weichenkörpers 11 ergibt sich infolge einer Verdrehbewegung des Weichenkörpers mit Bezug auf die Zeichnungsebene nach Fig. 3 entgegen dem Uhrzeigersinn, wobei in dieser Stellung der rechte Ausgangsanschluss 4 mit dem Eingangsanschluss 3 verbunden ist. In diesem Fall findet der Transport von über den Eingangsanschluss 3 aufgegebenem Schüttgut über die Leitfläche 17 der Rückseite 15 der Weichenklappe 8 statt. Die Weichenklappe 7 ist in dieser Stellung nicht in Funktion.

Die in den Figuren nicht weiter dargestellte dritte Position des Weichenkörpers 11 ergibt sich ausgehend aus der Normalstellung des Weichenkörpers 11 bei einer Verdrehbewegung mit Bezug auf die Zeichnungsebene nach Fig. 3 in Richtung des Uhrzeigersinns. In dieser Stellung des Weichenkörpers 11 ist der Eingangsanschluss 3 mit dem linken Ausgangsanschluss 5 verbunden, in weichem Fall ein Transport von über den Eingangsanschluss 3 aufgegebenes Schüttgut über die von der Rückseite 15 bereitgestellten Leitfläche 17 der Weichenklappe 7 erfolgt. In dieser Betriebsstellung des Weichenkörpers 11 ist die Weichenklappe 8 außer Funktion.

Die Weichenklappen 7 und 8 sind erfindungsgemäß spaltfrei zwischen den Begrenzungsscheiben angeordnet, so dass die vorbeschriebene und dem Stand der Technik anhaftende Problematik mit der erfindungsgemäßen Ausgestaltung überwunden ist.

### Bezugszeichenliste

- 1: Schüttgutweiche
- 2: Gehäuse
- 3: Eingangsanschluss
- 4: Ausgangsanschluss rechts
- 5: Ausgangsanschluss links
- 8: Ausgangsanschluss unten
- 7: Weichenklappe
- 8: Weichenklappe
- 9: Drehachse
- 10: Drehachse
- 11: Weichenkörper
- 12: Begrenzungsscheibe
- 13: Begrenzungsscheibe
- 14: Vorderseite
- 15: Rückseite
- 16: Leitfläche Vorderseite
- 17: Leitfläche Rückseite
- 18: Volumenraum
- 19: Verstelleinrichtung
- 20: Drehachse

## Patentansprüche

1. Schüttgutweiche mit einem Gehäuse (2) mit einem Eingangsanschluss (3) und mehreren Ausgangsanschlüssen (4, 5, 6) sowie mit einer verschwenkbaren und eine Leitfläche (16) bereitstellenden Weichenklappe (7), mittels welcher die Ausgangsanschlüsse (4, 5, 6) mit dem Eingangsanschluss 3 wahlweise verbindbar sind, wobei die Weichenklappe (7) als Teil eines verdrehbar im Gehäuse (2) angeordneten Weichenkörpers (11) ausgebildet ist, der zwei voneinander beabstandete Begrenzungsscheiben (12, 13) aufweist, die die Weichenklappe (7) spaltfrei zwischen sich aufnehmen, welche Begrenzungsscheiben (12, 13) kreisförmig ausgebildet sind und wobei der Weichenkörper (11) eine zweite Weichenklappe (8) aufweist,
**dadurch gekennzeichnet,**
**dass** die Weichenklappen (7, 8) jeweils sowohl auf ihrer Vorderseite (14) als auch auf ihrer Rückseite (15) eine jeweilige Leitfläche (16, 17) aufweisen und mit ihren jeweiligen vorderseitigen Leitflächen (16) einander zugewandet ausgerichtet sind und die Weichenklappen (7, 8) unter Einschluss eines spitzen Winkels schräg zueinander verlaufen und einen keilförmig zulaufenden Volumenraum (18) zwischen sich ausbilden.

2. Schüttgutweiche nach Anspruch 1, **dadurch gekennzeichnet, dass** die Weichenklappen eben ausgebildet sind.

## Claims

1. A switch for bulk material comprising a housing (2) having an inlet connection (3) and several outlet connections (4, 5, 6) as well as a switch flap (7), which can be swiveled and which provides a guide surface (16), by means of which switch flap the outlet connections (4, 5, 6) can be optionally connected to the inlet connection (3), wherein the switch flap (7) is designed as a part of a switch body (11), which is arranged in the housing (2) in a rotatable manner, which switch body comprises two limitation disks (12, 13) spaced apart from each other, which receive the switch flap (7) between them without any gap, which limitation disks (12, 13) are circular and wherein the switch body (11) comprises a second switch flap (8),
**characterized in**
**that** the switch flaps (7, 8) respectively comprise a respective guide surface (16, 17) both on the front side (14) and on the rear side (15) thereof and the respective guide surfaces (16) on the front side are facing each other, and the switch flaps (7, 8) extend in an inclined manner with respect to each other while forming an acute angle and form a volume space (18) between them which is tapering in form of a wedge.

2. A switch for bulk material according to claim 1, **characterized in that** the switch flaps are planar.

## Revendications

1. Séparateur de marchandises en vrac comprenant un boîtier (2) ayant un raccord d'entrée (3) et plusieurs raccords de sortie (4, 5, 6) ainsi qu'une trappe de séparateur pivotante et fournissant une surface de guidage (16), par moyen de laquelle trappe les raccords de sortie (4, 5, 6) peuvent être sélectivement reliés au raccord d'entrée (3), la trappe de séparateur (7) étant configurée comme une partie d'un corps de séparateur (11) disposé de façon rotative dans le boîtier (2), lequel corps de séparateur comprend deux disques de limitation (12, 13) espacées l'une de l'autre, qui reçoivent entre elles la trappe de séparateur (7) sans laisser de fente, lesquelles disques de limitation (12, 13) sont circulaires et le corps de séparateur (11) comprend une deuxième trappe de séparateur (8),
**caractérisé en ce**
**que** les trappes de séparateur (7, 8) comprennent chacune une surface de guidage respective (16, 17) et sur leur face avant (14) et sur leur face arrière (15) et se font face avec leurs surfaces de guidage respectives (16) du côté avant, et les trappes de séparateur (7, 8) s'étendent de manière oblique l'une par rapport à l'autre en formant un angle aigu et forment entre elles un espace volumétrique (18) qui s'effile sous forme de coin.

2. Séparateur de marchandises en vrac selon la revendication 1, **caractérisé en ce que** les trappes de séparateur sont de forme plane.
